# EUROPÄISCHE PATENTSCHRIFT

(11) **EP 4 480 290 B1**
(45) Veröffentlichungstag und Bekanntmachung des Hinweises auf die Patenterteilung: **25.02.2026**
(21) Anmeldenummer: 24180075.4
(22) Anmeldetag: 05.06.2024
(51) Int. Cl.: A01B 59/00, A01B 59/043, A01B 59/06

(54) **KUPPLUNGSANORDNUNG FÜR EINEN DREIPUNKT-KRAFTHEBER EINES LANDWIRTSCHAFTLICHEN TRAKTORS**
HITCH ASSEMBLY FOR A THREE POINT POWER LIFT OF AN AGRICULTURAL TRACTOR
ENSEMBLE D'ACCOUPLEMENT POUR UN RELEVAGE À TROIS POINTS D'UN TRACTEUR AGRICOLE

(30) Priorität: 21.06.2023 DE 102023116206
(43) Veröffentlichungstag der Anmeldung: 25.12.2024
(73) Patentinhaber: Deere & Company, Moline, IL 61265 (US)
(72) Erfinder: Schibel, Achim, Mannheim (DE)
(74) Vertreter: Dehnhardt, Florian Christopher

(56) Entgegenhaltungen:
- CH-A5- 572 835
- DE-A1- 102021 113 462
- DE-C1- 19 744 479

## Beschreibung

Die Erfindung betrifft eine Kupplungsanordnung für einen Dreipunkt-Kraftheber eines landwirtschaftlichen Traktors, umfassend einen traktorseitig angelenkten Unterlenker sowie eine daran angebrachte Hubstrebe zum Heben und Senken des Unterlenkers mittels eines Hubwerks, wobei an einem freien Ende des Unterlenkers ein Fanghaken mit einem Kupplungskörper sowie einem Verschlussmechanismus mit einem in dem Kupplungskörper längsverschiebbar gelagerten Verschlussriegel vorgesehen ist, wobei sich der Verschlussriegel mittels eines daran angebrachten Zughebels entgegen einer rückstellenden Federkraft aus einer den Fanghaken verriegelnden ersten Verschlussposition in eine den Fanghaken freigebende zweite Verschlussposition auslenken lässt.

Eine solche Kupplungsanordnung ist aus der DE 10 2021 113 462 A1 bekannt. Diese umfasst einen Kupplungskörper mit einem Fanghaken zur Aufnahme eines mit einem Befestigungsbereich des Fanghakens komplementär ausgebildeten Kupplungselements entlang einer festgelegten Aufnahmerichtung. Ein Verschlussriegel ist derart in einer an dem Kupplungskörper vorgesehenen Gleitführung längsverschiebbar gelagert, dass sich dieser unter Freigabe des Befestigungsbereichs ausschließlich senkrecht zur festgelegten Aufnahmerichtung aus einer verriegelnden Ruheposition auslenken lässt, wobei der in der verriegelnden Ruheposition befindliche Verschlussriegel den Befestigungsbereich in der festgelegten Aufnahmerichtung um mehr als die Hälfte sperrend überragt. Befindet sich in dem Befestigungsbereich ein als Kupplungskugel ausgebildetes Kupplungselement, so erstreckt sich der Verschlussriegel dementsprechend über den dem Verschlussriegel in Aufnahmerichtung zugewandten Scheitelpunkt hinaus. Der so geschaffene Verschlussmechanismus schließt die Möglichkeit eines ungewollten Aufschiebens des Verschlussriegels aufgrund von betriebsbedingt auftretenden Krafteinwirkungen seitens des Kupplungselements weitgehend aus. An dem Verschlussriegel ist ein Zughebel angebracht, mittels dessen sich der Verschlussriegel bedienerseitig von Hand aus der verriegelnden Ruheposition auslenken lässt. Der Zughebel bzw. ein daran ausgebildetes Handstück erstreckt sich zu diesem Zweck durch eine an einem Gehäuse des Kupplungskörpers vorgesehene rückwärtige Austrittsöffnung nach außen heraus. Zum Öffnen des Verschlussmechanismus beim Abkuppeln eines an dem Dreipunkt-Kraftheber angebrachten landwirtschaftlichen Anbau- oder Zusatzgeräts muss der Fahrer daher die Fahrerkabine verlassen oder eine weitere Person um Hilfe bitten.

Aufgabe der vorliegenden Erfindung ist es, eine Kupplungsanordnung der eingangs genannten Art bezüglich ihrer Nutzerfreundlichkeit zu verbessern.

Diese Aufgabe wird durch eine Kupplungsanordnung für einen Dreipunkt-Kraftheber eines landwirtschaftlichen Traktors mit den Merkmalen des Patentanspruchs 1 gelöst.

Die Kupplungsanordnung für einen Dreipunkt-Kraftheber eines landwirtschaftlichen Traktors umfasst einen traktorseitig angelenkten Unterlenker sowie eine daran angebrachte Hubstrebe zum Heben und Senken des Unterlenkers mittels eines Hubwerks, wobei an einem freien Ende des Unterlenkers ein Fanghaken mit einem Kupplungskörper sowie einem Verschlussmechanismus mit einem in dem Kupplungskörper längsverschiebbar gelagerten Verschlussriegel vorgesehen ist, wobei sich der Verschlussriegel mittels eines daran angebrachten Zughebels entgegen einer rückstellenden Federkraft aus einer den Fanghaken verriegelnden ersten Verschlussposition in eine den Fanghaken freigebende zweite Verschlussposition auslenken lässt. Erfindungsgemäß ist an der Hubstrebe ein Umlenkhebel schwenkbar angebracht, an dessen Freiende ein mit dem Zughebel verbundener erster Zugseilabschnitt derart befestigt ist, dass eine an dem Umlenkhebel mittels eines zweiten Zugseilabschnitts hervorgerufene Schwenkbewegung zu einer Auslenkung des Verschlussriegels in die zweite Verschlussposition führt.

Die Verwendung eines Umlenkhebels ermöglicht es, dass der Verlauf des zweiten Zugseilabschnitt nicht notwendigerweise mit der Auslenkungsrichtung des Verschlussriegels korrespondieren muss, sondern eine davon abweichende Orientierung aufweisen kann. Durch entsprechende Anordnung des Umlenkhebels an der Hubstrebe lässt sich so das Ende des zweiten Zugseilanschnitts zum Zwecke der bequemen Bedienung von Hand insbesondere entlang der (sich aufwärts zwischen Unterlenker und einem Hubarm des Hubwerks erstreckenden) Hubstrebe und damit in Richtung einer heckseitigen Fensteröffnung einer Fahrerkabine des landwirtschaftlichen Traktors führen. Dies erlaubt es dem Fahrer, den Verschlussmechanismus beim Abkuppeln eines an dem Dreipunkt-Kraftheber angebrachten landwirtschaftlichen Anbau- oder Zusatzgeräts ohne Verlassen der Fahrerkabine oder Zuhilfenahme einer weiteren Person "von der Ferne aus" und damit in sicherem Abstand durch Ziehen am zweiten Zugseilabschnitt zu öffnen.

Der zweite Zugseilabschnitt kann hierbei mittels eines Karabinerhakens an einem sich rückwärtig aus einem Gehäuse des Kupplungskörpers nach außen erstreckenden Endbereich des Zughebels angebracht sein.

Vorteilhafte Ausführungen der erfindungsgemäßen Kupplungsanordnung gehen aus den Unteransprüchen hervor.

Vorzugsweise ist der zweite Zugseilabschnitt unabhängig vom ersten Zugseilabschnitt am Freiende des Umlenkhebels befestigt. Dementsprechend ist es denkbar, dass es sich um zwei getrennte Zugseilabschnitte handelt, von denen jeder mittels eines eigenen Befestigungselements am Umlenkhebel montiert ist. Bei einem beschädigungsbedingt vorzunehmenden Austausch ist lediglich der betroffene Abschnitt zu ersetzen.

Im Sinne einer vereinfachten Montage mit nur einem Befestigungselement am Umlenkhebel kann jedoch auch vorgesehen sein, dass der erste und zweite Zugseilabschnitt Bestandteil eines durchgehenden Zugseils ist.

Ungeachtet dessen, ob das Zugseil durchgehend ausgebildet oder in voneinander unabhängige Zugseilabschnitte aufgeteilt ist, weist dieses typischerweise einen aus Stahllitzen oder hochfesten Kunststofffasern bestehenden flexiblen Kern auf, der von einem schützenden Kunststoffmantel umgeben ist.

Da der Dreipunkt-Kraftheber linke und rechte Unterlenker aufweist, mithin linke und rechte Kupplungsanordnungen vorhanden sind, ist es denkbar, dass deren jeweils zugehörige zweite Zugseilabschnitte an ihren offenen Enden miteinander verbunden oder als durchgehendes Zugseil ausgebildet sind. Die so entstehende Seilschlaufe vereinfacht eine Bedienung mit einer einzelnen Hand.

Des Weiteren besteht die Möglichkeit, dass eine aufgrund der Schwenkbewegung des Umlenkhebels quer zur Auslenkung des Verschlussriegels gerichtete Bewegung des ersten Zugseilabschnitts zur Betätigung eines den Verschlussriegel in der zweiten Verschlussposition arretierenden Rastmechanismus dient. Der Rastmechanismus macht sich den Umstand zunutze, dass der erste Zugseilabschnitt einen der Schwenkbewegung des Umlenkhebels folgenden Bogen beschreibt. Hierbei ist der Zughebel gelenkig derart am Verschlussriegel angebracht, dass sich eine am Zughebel ausgebildete stufenförmige Ausnehmung bzw. Rastnase der bogenförmigen Bewegung des ersten Zugseilabschnitts folgend in einer Kante einer rückwärtigen Austrittsöffnung des Kupplungskörpers bzw. des von diesem umfassten Gehäuses reversibel einhängen lässt, sobald die zweite Verschlussposition erreicht ist. Hierdurch wird ein Abkuppeln eines landwirtschaftlichen Anbau- oder Anbaugeräts vom Dreipunkt-Kraftheber weiter vereinfacht.

Die erfindungsgemäße Kupplungsanordnung wird im Folgenden anhand der beigefügten Zeichnungen näher erläutert. Hierbei bezeichnen übereinstimmende Bezugszeichen identische oder bezüglich ihrer Funktion vergleichbare Komponenten. Es zeigen:
- Fig. 1: ein Ausführungsbeispiel der erfindungsgemäßen Kupplungsanordnung an einem ausschnittsweise dargestellten Dreipunkt-Kraftheber mit einem Verschlussriegel, der sich in einer einen Fanghaken verriegelnden ersten Verschlussposition befindet,
- Fig. 2: eine Darstellung der erfindungsgemäßen Kupplungsanordnung gemäß Fig. 1, bei der sich der Verschlussriegel in einer den Fanghaken freigebenden zweiten Verschlussposition befindet,
- Fig. 3: eine Detailansicht eines von der erfindungsgemäßen Kupplungsanordnung gemäß Fig. 1 umfassten Umlenkhebels, und
- Fig. 4: eine Aufsicht auf die erfindungsgemäße Kupplungsanordnung gemäß Fig. 1 in Blickrichtung entlang einer an einem Unterlenker angebrachten Hubstrebe.

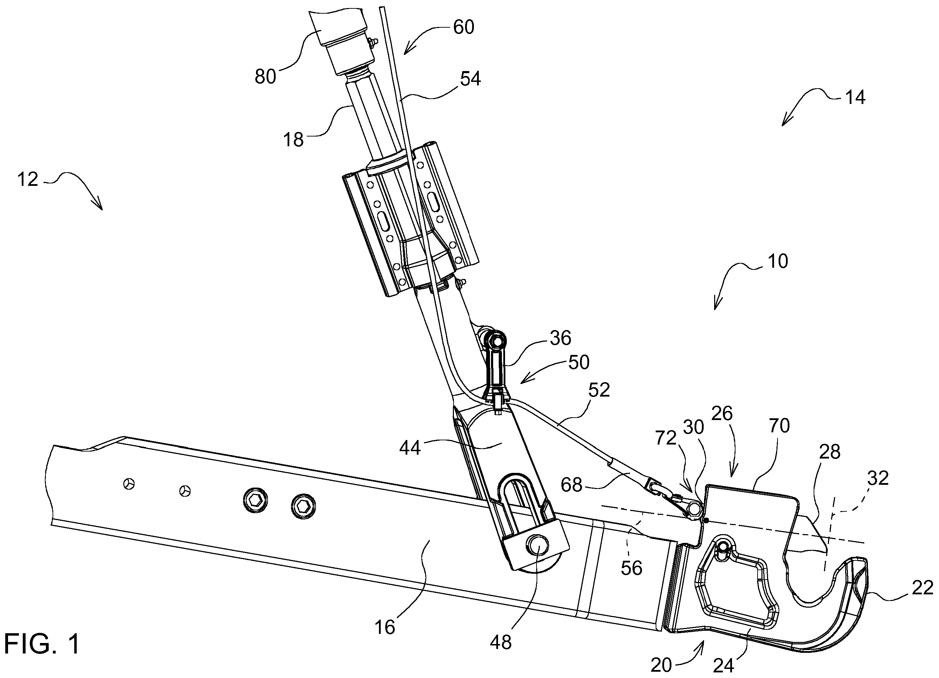

Fig. 1 zeigt ein Ausführungsbeispiel der erfindungsgemäßem Kupplungsanordnung 10 an einem ausschnittsweise dargestellten Dreipunkt-Kraftheber 12 eines landwirtschaftlichen Traktors 14.

Der zur Anbringung eines landwirtschaftlichen Anbau- oder Zusatzgeräts vorgesehene Dreipunkt-Kraftheber 12 ist von herkömmlicher Bauart und umfasst spiegelsymmetrisch zueinander verlaufende linke und rechte Unterlenker 16, von denen aus Gründen der Übersichtlichkeit lediglich einer von beiden wiedergegeben ist. Jeder der Unterlenker 16 ist in einem unteren Bereich eines (nicht gezeigten) heckseitigen Differentialgehäuses des landwirtschaftlichen Traktors 14 angelenkt und lässt sich mittels einer Hubstrebe 18, die an einem (nicht gezeigten) Hubarm eines hydraulischen Hubwerks eingehängt ist, auf Veranlassung eines Bedieners anheben und absenken.

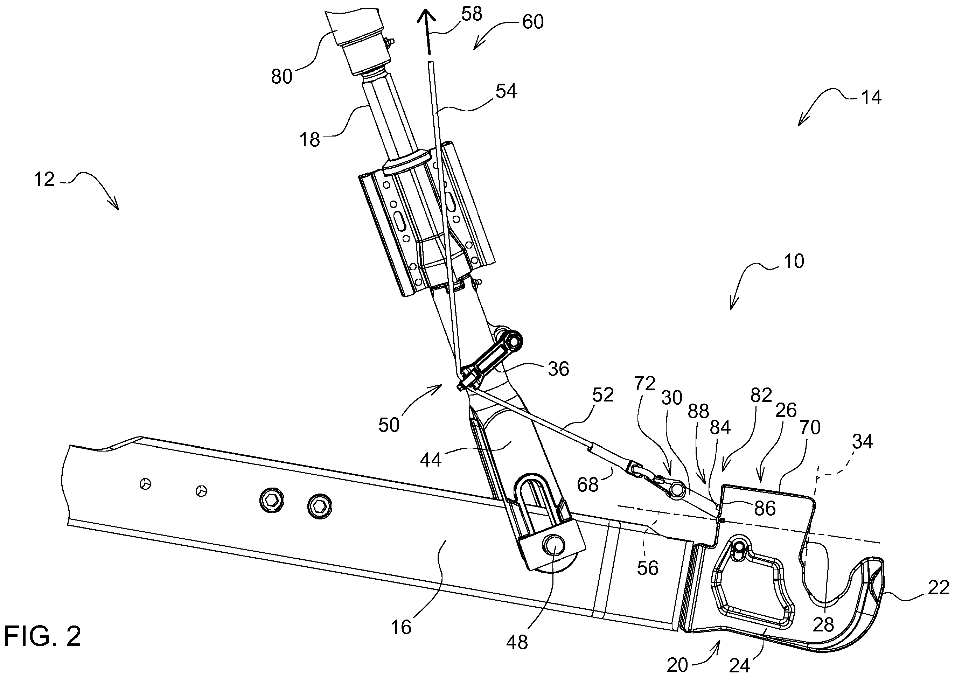

Wie in Fig. 1 zu erkennen ist, umfasst die Kupplungsanordnung 10 neben dem Unterlenker 16 sowie der daran angebrachten Hubstrebe 18 an einem freien Ende 20 des Unterlenkers 16 einen Fanghaken 22 mit einem Kupplungskörper 24 sowie einen Verschlussmechanismus 26 mit einem in dem Kupplungskörper 24 längsverschiebbar gelagerten Verschlussriegel 28. Der Verschlussriegel 28 lässt sich mittels eines daran angebrachten Zughebels 30 entgegen einer rückstellenden Federkraft aus einer den Fanghaken 22 verriegelnden ersten Verschlussposition 32 gemäß Fig. 1 in eine den Fanghaken 22 freigebende zweite Verschlussposition 34 gemäß Fig. 2 auslenken.

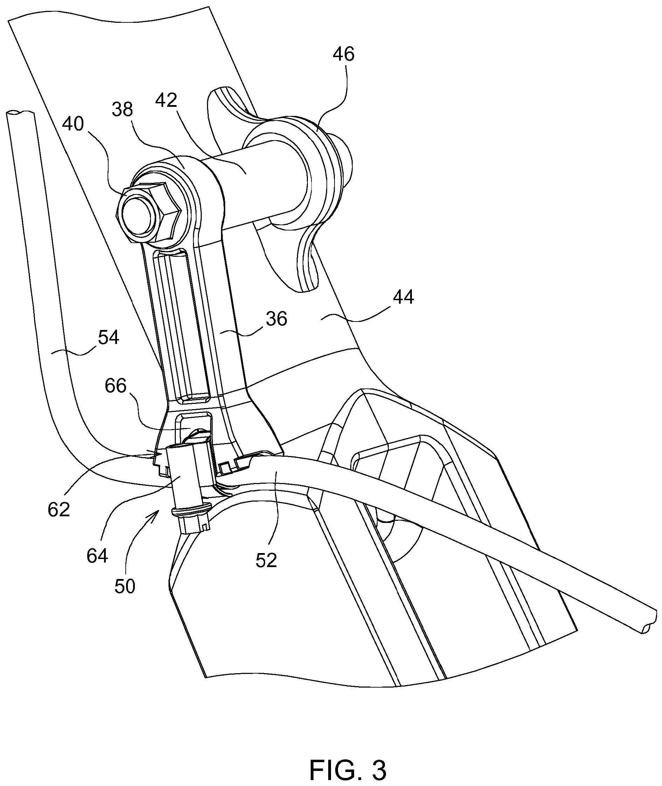

Des Weiteren ist an jeder der Hubstreben 18 ein in Fig. 3 im Detail widergegebener Umlenkhebel 36 schwenkbar angebracht. Genauer gesagt handelt es sich bei dem Umlenkhebel 36 um ein knochenförmiges Spritzgussteil mit einem daran ausgebildeten Befestigungsauge 38, durch das ein mittels einer Kragenmutter 40 verschraubter Lagerbolzen 42 drehbeweglich hindurchgeführt ist. Der Lagerbolzen 42 ist an einem an einer unteren Befestigungsgabel 44 der Hubstrebe 18 ausgebildeten Befestigungsvorsprung 46 fest angebracht. Der Befestigungsvorsprung 46 ist dabei einstückiger Bestandteil der mittels eines lösbaren T-Bolzens 48 an dem Unterlenker 16 angebrachten unteren Befestigungsgabel 44.

An einem dem Befestigungsauge 38 gegenüberliegenden Freiende 50 des Umlenkhebels 36 ist ein mit dem Zughebel 30 verbundener erster Zugseilabschnitt 52 derart befestigt, dass eine an dem Umlenkhebel 36 mittels eines zweiten Zugseilabschnitts 54 hervorgerufene Schwenkbewegung zu einer Auslenkung des Verschlussriegels 28 in die zweite Verschlussposition 34 führt. Der Umlenkhebel 36 befindet sich dazu an einer Stelle der Hubstrebe 18, die gewährleistet, dass der erste Zugseilabschnitt 52 über die gesamte Schwenkbewegung des Umlenkhebels 36 gesehen einen Winkel α von 40 bis 70 Grad gegenüber der Auslenkungsrichtung 56 des Verschlussriegels 28 nicht überschreitet. Dies stellt eine verkantungsfreie und damit leichtgängige Betätigung des innerhalb einer zugehörigen Gleitführung am Kupplungskörper 24 gelagerten Verschlussriegels 28 seitens des ersten Zugseilabschnitts 52 sicher. Das Öffnen des Verschlussmechanismus 26 erfolgt durch Ziehen am zweiten Zugseilabschnitt 54 mit der Hand (vorliegend in Pfeilrichtung 58). Hierbei nimmt der Umlenkhebel 36 die in Fig. 2 dargestellte zurückgeschwenkte Stellung ein.

Beispielsgemäß ist der erste und zweite Zugseilabschnitt 52, 54 Bestandteil eines durchgehenden Zugseils 60. Das Zugseil 60 weist einen aus Stahllitzen oder hochfesten Kunststofffasern bestehenden flexiblen Kern auf, der von einem schützenden Kunststoffmantel umgeben ist.

Entsprechend der Darstellung in Fig. 3 dient ein Befestigungselement 62 in Gestalt einer herkömmlichen Schlauchschelle 64 der Befestigung des Zugseils 60 am Umlenkhebel 36. Die Schlauchschelle 64 ist durch eine am Freiende 50 des Umlenkhebels 36 ausgebildete Öffnung 66 hindurchgeführt und erlaubt eine stufenlose Einstellung der Länge des ersten Zugseilabschnitts 52.

Abweichend davon kann der zweite Zugseilabschnitt 54 auch unabhängig vom ersten Zugseilabschnitt 52 am Freiende 50 des Umlenkhebels 36 befestigt sein. In diesem Fall handelt es sich um zwei getrennte Zugseilabschnitte, von denen jeder mittels eines eigenen Befestigungselements am Umlenkhebel 36 montiert ist. Bei einem beschädigungsbedingt vorzunehmenden Austausch ist lediglich der betroffene Abschnitt zu ersetzen.

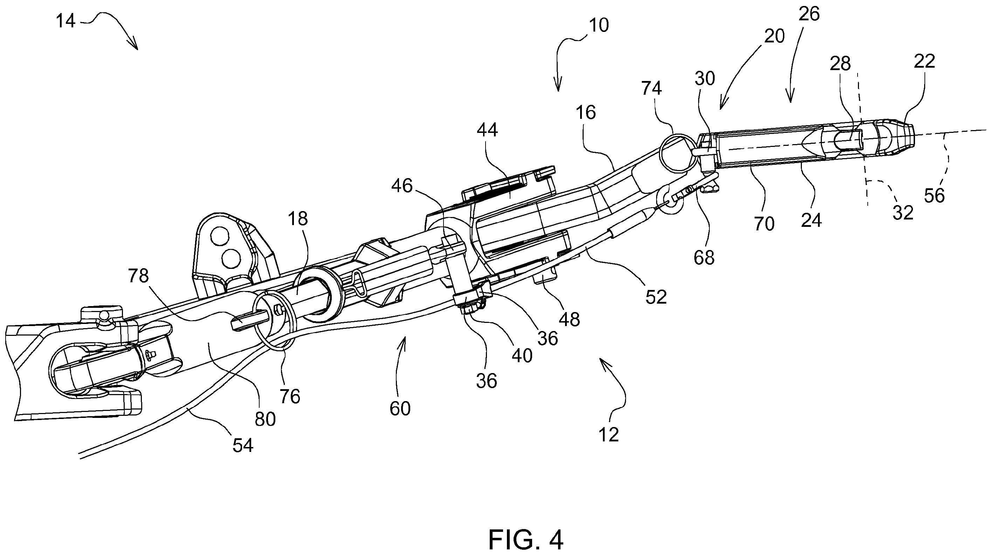

Wie insbesondere in der Aufsichtsdarstellung von Fig. 4 zu erkennen ist, ist der erste Zugseilabschnitt 52 mittels eines Karabinerhakens 68 an einem sich rückwärtig aus einem Gehäuse 70 des Kupplungskörpers 24 nach außen erstreckenden Endbereich 72 des Zughebels 30 angebracht. Soll bei bestimmten Anwendungen ein versehentliches Öffnen des Verschlussmechanismus 26 durch Ziehen am Zugseil 60 ausgeschlossen werden, so lässt sich der Karabinerhaken 68 vom Zughebel 30 abnehmen und beispielsweise durch Einhängen am zweiten Zugseilabschnitt 54 verwahren. Der Zughebel 26 kann in diesem Fall nur unmittelbar durch Ergreifen eines in seinem Endbereich 72 verlaufenden Betätigungsrings 74 mit der Hand in die zweite Verschlussposition 34 verbracht werden.

Aufgrund der gewählten Positionierung des Umlenkhebels 36 an der Hubstrebe 18 lässt sich das Ende des zweiten Zugseilanschnitts 54 zum Zwecke der bequemen Bedienung von Hand entlang der sich aufwärts zwischen Unterlenker 16 und Hubarm erstreckenden Hubstrebe 18 und damit in Richtung einer heckseitigen Fensteröffnung einer Fahrerkabine des landwirtschaftlichen Traktors 14 führen. Hierzu ist der zweite Zugseilabschnitt 54 zusätzlich durch einen Haltering 76 hindurchgeführt, der in einer Befestigungsöse 78 an einer am Hubarm eingehängten oberen Befestigungsgabel 80 der Hubstrebe 18 aufgenommen ist.

Dies erlaubt es dem Fahrer, den Verschlussmechanismus 26 beim Abkuppeln eines an dem Dreipunkt-Kraftheber 12 angebrachten landwirtschaftlichen Anbau- oder Zusatzgeräts ohne Verlassen der Fahrerkabine oder Zuhilfenahme einer weiteren Person "von der Ferne aus" und damit in sicherem Abstand durch Ziehen am zweiten Zugseilabschnitt 54 zu öffnen.

Da der Dreipunkt-Kraftheber 12 linke und rechte Unterlenker 16 aufweist, mithin linke und rechte Kupplungsanordnungen 10 vorhanden sind, sind die jeweils zugehörigen zweiten Zugseilabschnitte 54 an ihren offenen Enden miteinander verbunden oder als durchgehendes Zugseil 60 ausgebildet. Die so entstehende Seilschlaufe vereinfacht eine Bedienung mit einer einzelnen Hand.

Wie weiterhin in Fig. 2 zu erkennen ist, ist der Zughebel 30 Bestandteil eines Rastmechanismus 82, der es ermöglicht, den Verschlussriegel 28 in seiner den Fanghaken 22 freigebenden zweiten Verschlussposition 34 vorübergehend zu arretieren. Der Rastmechanismus 82 macht sich den Umstand zunutze, dass der erste Zugseilabschnitt 52 einen der Schwenkbewegung des Umlenkhebels 36 folgenden Bogen beschreibt, der eine quer zur Auslenkung des Verschlussriegels 28 gerichtete Bewegung des ersten Zugseilabschnitts 52 zur Folge hat.

Dieser lässt sich zur Betätigung des Rastmechanismus 82 heranziehen. Hierzu ist der Zughebel 30 gelenkig derart am Verschlussriegel 28 angebracht, dass sich eine am Zughebel 30 ausgebildete stufenförmige Ausnehmung bzw. Rastnase 84 der bogenförmigen Bewegung des ersten Zugseilabschnitts 52 folgend in einer Kante 86 einer rückwärtigen Austrittsöffnung 88 des Kupplungskörpers 24 bzw. des von diesem umfassten Gehäuses 70 einhängen lässt, sobald die zweite Verschlussposition 34 erreicht ist.

## Patentansprüche

1. Kupplungsanordnung für einen Dreipunkt-Kraftheber eines landwirtschaftlichen Traktors, umfassend einen traktorseitig angelenkten Unterlenker (16) sowie eine daran angebrachte Hubstrebe (18) zum Heben und Senken des Unterlenkers (16) mittels eines Hubwerks, wobei an einem freien Ende (20) des Unterlenkers (16) ein Fanghaken (22) mit einem Kupplungskörper (24) sowie einem Verschlussmechanismus (26) mit einem in dem Kupplungskörper (24) längsverschiebbar gelagerten Verschlussriegel (28) vorgesehen ist, wobei sich der Verschlussriegel (28) mittels eines daran angebrachten Zughebels (30) entgegen einer rückstellenden Federkraft aus einer den Fanghaken (22) verriegelnden ersten Verschlussposition (32) in eine den Fanghaken (22) freigebende zweite Verschlussposition (34) auslenken lässt, **dadurch gekennzeichnet, dass** an der Hubstrebe (18) ein Umlenkhebel (36) schwenkbar angebracht ist, an dessen Freiende (50) ein mit dem Zughebel (30) verbundener erster Zugseilabschnitt (52) derart befestigt ist, dass eine an dem Umlenkhebel (36) mittels eines zweiten Zugseilabschnitts (54) hervorgerufene Schwenkbewegung zu einer Auslenkung des Verschlussriegels (28) in die zweite Verschlussposition (34) führt.

2. Kupplungsanordnung nach Anspruch 1, **dadurch gekennzeichnet, dass** der zweite Zugseilabschnitt (54) unabhängig vom ersten Zugseilabschnitt (52) am Freiende (50) des Umlenkhebels (36) befestigt ist.

3. Kupplungsanordnung nach Anspruch 1, **dadurch gekennzeichnet, dass** der erste und zweite Zugseilabschnitt (52, 54) Bestandteil eines durchgehenden Zugseils (60) ist.

4. Kupplungsanordnung nach einem der vorhergehenden Ansprüche, **dadurch gekennzeichnet, dass** eine aufgrund der Schwenkbewegung des Umlenkhebels (36) quer zur Auslenkung des Verschlussriegels (28) gerichtete Bewegung des ersten Zugseilabschnitts (52) zur Betätigung eines den Verschlussriegel (28) in der zweiten Verschlussposition (34) arretierenden Rastmechanismus (82) dient.

## Claims

1. Coupling assembly for a three-point hitch of an agricultural tractor, comprising a lower link (16), articulated on the tractor, and a lift strut (18), attached thereto, for raising and lowering the lower link (16) by means of a lift mechanism, wherein a catch hook (22) that has a coupling body (24) and a locking mechanism (26) having a locking latch (28), which is longitudinally movably mounted in the coupling body (24), is provided at a free end (20) of the lower link (16), wherein the locking latch (28) can be deflected by means of a pull lever (30) attached thereto, counter to a restoring spring force, out of a first locking position (32), which locks the catch hook (22), into a second locking position (34), which releases the catch hook (22), **characterized in that** a deflection lever (36) is pivotably attached to the lift strut (18), on the free end (50) of which lever a first pull cable section (52) connected to the pull lever (30) is secured in such a way that a pivoting movement brought about at the deflection lever (36) by means of a second pull cable section (54) leads to a deflection of the locking latch (28) into the second locking position (34).

2. Coupling assembly according to Claim 1, **characterized in that** the second pull cable section (54) is secured to the free end (50) of the deflection lever (36) independently of the first pull cable section (52).

3. Coupling assembly according to Claim 1, **characterized in that** the first and second pull cable sections (52, 54) are parts of a continuous pull cable (60).

4. Coupling assembly according to any one of the preceding claims, **characterized in that** a movement of the first pull cable section (52) directed transversely to the deflection of the locking latch (28) owing to the pivoting movement of the deflection lever (36) serves for the actuation of a latching mechanism (82), which retains the locking latch (28) in the second locking position (34).

## Revendications

1. Ensemble d'attelage pour un système de relevage à trois points d'un tracteur agricole, comprenant un bras inférieur (16) articulé côté tracteur et une entretoise de levage (18) installée sur celui-ci destinée à lever et abaisser le bras inférieur (16) au moyen d'un mécanisme de levage, un crochet d'arrêt (22) avec un corps d'attelage (24) et un mécanisme de fermeture (26) avec un verrou de fermeture (28) monté de manière à pouvoir coulisser longitudinalement dans le corps d'attelage (24) étant prévu sur une extrémité libre (20) du bras inférieur (16), le verrou de fermeture (28) pouvant être dévié au moyen d'un levier de traction (30) installé sur celui-ci à l'encontre d'une force de rappel de ressort depuis une première position de fermeture (32) verrouillant le crochet d'arrêt (22) dans une deuxième position de fermeture (34) libérant le crochet d'arrêt (22), **caractérisé en ce que** qu'un levier de renvoi (36) est installé de manière à pouvoir pivoter sur l'entretoise de levage (18), sur l'extrémité libre (50) duquel une première section de câble de traction (52) reliée au levier de traction (30) est fixée de telle manière qu'un déplacement par pivotement provoqué au moyen d'une deuxième section de câble de traction (54) sur le levier de renvoi (36) donne lieu à une déviation du verrou de fermeture (28) dans la deuxième position de fermeture (34).

2. Ensemble d'attelage selon la revendication 1, **caractérisé en ce que** la deuxième section de câble de traction (54) est fixée indépendamment de la première section de câble de traction (52) sur l'extrémité libre (50) du levier de renvoi (36).

3. Ensemble d'attelage selon la revendication 1, **caractérisé en ce que** la première et la deuxième section de câble de traction (52, 54) font partie intégrante d'un câble de traction continu (60).

4. Ensemble d'attelage selon l'une des revendications précédentes, **caractérisé en ce qu'**un déplacement de la première section de câble de traction (52) dirigé transversalement à la déviation du verrou de fermeture (28) en raison du déplacement par pivotement du levier de renvoi (36) sert à actionner un mécanisme d'enclenchement (82) arrêtant le verrou de fermeture (28) dans la deuxième position de fermeture (34).
